# EUROPEAN PATENT APPLICATION

(11) **EP 4 672 396 A1**
(43) Date of publication of application: **31.12.2025**
(21) Application number: 25161574.6
(22) Date of filing: 04.03.2025
(51) Int. Cl.: H01M 10/04, H01M 10/0525, H01M 10/0587, H01M 50/103, H01M 50/176, H01M 50/566

(54) **SECONDARY BATTERY INCLUDING ELECTRODE ASSEMBLY LATERALLY INSERTED INTO CASE, AND MANUFACTURING METHOD THEREOF**

(30) Priority: 28.06.2024 KR 20240085062
(71) Applicant: Samsung SDI Co., Ltd., Yongin-si, Gyeonggi-do 17084 (KR)
(72) Inventor: LEE, JUHYUNG, Yongin-si, Gyeonggi-do 17084 (KR)
(74) Representative: Gulde & Partner

(57) **Abstract**

A secondary battery includes: a case having an open side surface; an electrode assembly inserted into the case through the open side surface, the electrode assembly including a bent electrode tab; a terminal electrically connected to the electrode tab of the electrode assembly and exposed to an outside of the case; a cover covering the open side surface of the case; an electrode plate insulating member electrically insulating an electrode plate of the electrode assembly from the terminal; and a bent portion insulating member electrically insulating an inner surface of the cover from the bent portion of the electrode tab.

## Description

### BACKGROUND

### 1. Field

Aspects of embodiments of the present disclosure relate to a secondary battery manufactured through a process including inserting an electrode assembly laterally into a case and a manufacturing method thereof.

### 2. Related Art

Different from primary batteries that are not designed to be recharged, secondary batteries are designed to be (re)charged and discharged. Low-capacity secondary batteries are used in small portable electronic devices, such as smartphones, feature phones, laptop computers, digital cameras, and camcorders, and high-capacity secondary batteries are widely used as driving power sources and power storage batteries for motors in hybrid vehicles, electric vehicles, and the like. A secondary battery generally includes an electrode assembly including a positive electrode and a negative electrode, a case accommodating the electrode assembly, and an electrode terminal connected to the electrode assembly.

Secondary batteries may be classified as cylindrical, pouch-type, and prismatic batteries. From among these types of secondary batteries, in the case of the pouch-type battery, an electrode assembly (e.g., a jelly roll) is laterally inserted into a pouch, and in the case of the prismatic secondary battery, an electrode assembly is vertically inserted into a case or laterally inserted into a side opening in the case.

In the case of a prismatic battery in which an electrode assembly is laterally inserted into a side opening in the case, as a size of the electrode assembly is increased to increase battery capacity, a volume of excess (or unused) space inside the case is reduced, and thus, an operation of assembling and inserting the electrode assembly into the case may be difficult.

The above information disclosed in this Background section is for enhancement of understanding of the background of the present disclosure, and therefore, it may contain information that does not constitute a related (or prior) art.

### SUMMARY

Embodiments of the present disclosure provide a secondary battery in which an electrode assembly is laterally inserted into a side opening in a case and, thereby, the electrode assembly is easily assembled into the secondary battery while having a maximized size in a limited space, and a manufacturing method thereof.

According to an embodiment of the present disclosure, a secondary battery includes a case having an open side surface, an electrode assembly inserted into the case through the open side surface and including a bent electrode tab, a terminal electrically connected to the electrode tab of the electrode assembly and exposed to the outside of the case, a cover covering the open side surface in the case, an electrode plate insulating member electrically insulating an electrode plate of the electrode assembly from the terminal, and a bent portion insulating member electrically insulating an inner surface of the cover from the bent portion of the bent electrode tab.

According to another embodiment of the present disclosure, a method of manufacturing a secondary battery includes manufacturing a case having an open side surface and a cover configured to cover the open side surface, manufacturing an electrode assembly including an electrode tab, manufacturing a terminal to be coupled to the case and coupling the terminal to the case, connecting the electrode tab of the electrode assembly to the terminal coupled to the case, applying an electrode plate insulating member to electrically insulate an electrode plate of the electrode assembly from the terminal, bending the electrode tab of the electrode assembly, inserting the electrode assembly having the bent electrode tab into the case through the open side surface in the case, applying a bent portion insulating member to electrically insulate the bent electrode tab from the cover, and covering the open side surface in the case with the cover.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 schematically illustrates an electrode assembly of a secondary battery;
FIG. 2A is a top perspective view of an exterior of a prismatic secondary battery according to some embodiments of the present disclosure;
FIG. 2B is an exploded perspective view of the prismatic secondary battery shown in FIG. 2A;
FIGS. 3 and 4 are cross-sectional views of portions of the prismatic secondary battery shown in FIGS. 2A and 2B, with FIG. 3 being a cross-sectional view taken along the line I-I' in FIG. 2A and FIG. 4 being a cross-sectional view taken along the line II-II' in FIG. 2A;
FIG. 5 illustrates the inside of a case and a terminal portion of a secondary battery according to some embodiments of the present disclosure;
FIGS. 6A to 6D are views illustrating steps of a process of assembling a case and an electrode assembly according to some embodiments of the present disclosure;
FIGS. 7A and 7B illustrate embodiments of an electrode plate insulating member, with FIG. 7A being an upper perspective view and FIG. 7B being a lower perspective view;
FIGS. 8A and 8B illustrate embodiments of a bent portion insulating member;
FIGS. 9A to 9D are views illustrating steps of a process of assembling a case and an electrode assembly according to some embodiments of the present disclosure;
FIGS. 10A to 10D are views illustrating steps of a process of assembling a case and an electrode assembly according to some embodiments of the present disclosure;
FIG. 11 is a perspective view of a secondary battery module in which secondary batteries are arranged according to some embodiments of the present disclosure;
FIG. 12 is a perspective view of a secondary battery pack including the secondary battery module shown in FIG. 11; and
FIG. 13 is a conceptual view of a vehicle including the secondary battery pack shown in FIG. 12.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

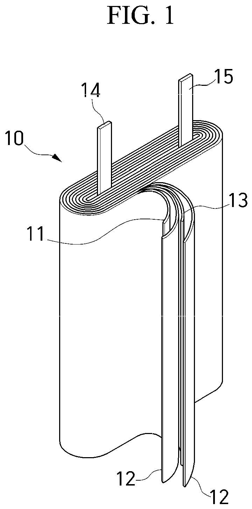

FIG. 1 shows an electrode assembly of a secondary battery.

Referring to FIG. 1, an electrode assembly 10 may be formed by winding or stacking a stack of a first electrode plate 11, a separator 12, and a second electrode plate 13, each of which are formed as thin plates or films. When the electrode assembly 10 is a wound stack, a winding axis may be parallel to the longitudinal direction of a case. In other embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying (e.g., coating or depositing) a first electrode active material, such as graphite or carbon, onto a first electrode substrate formed of a metal foil, such as copper, a copper alloy, nickel, or a nickel alloy. The first electrode plate 11 may include a first electrode tab 14 (e.g., a first uncoated portion), which is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying (e.g., coating or depositing) a second electrode active material, such as a transition metal oxide, onto a second electrode substrate formed of a metal foil, such as aluminum or an aluminum alloy. The second electrode plate 13 may include a second electrode tab 15 (e.g., a second uncoated portion), which is a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

In some embodiments, the electrode assembly 10 may be accommodated in a case along with an electrolyte. In a pouch-type secondary battery, an electrode assembly 10 may be accommodated in a pouch made of flexible material. In a cylindrical or prismatic secondary battery, an electrode assembly 10 may be accommodated in a cylindrical or prismatic metal case.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

As a non-limiting example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

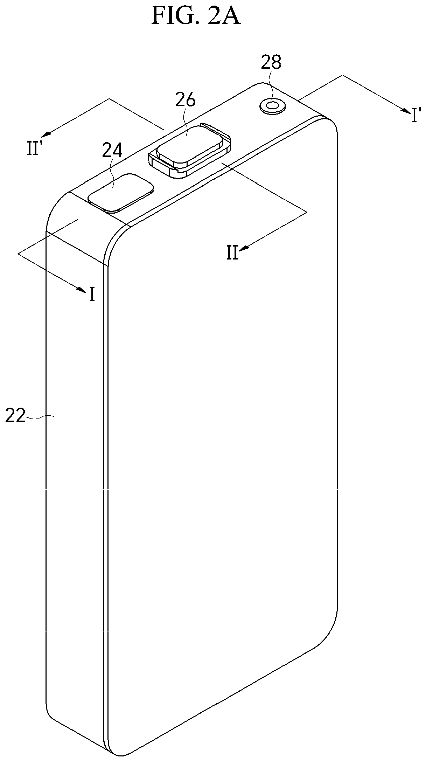

FIG. 2A is a top perspective view of an exterior of a secondary battery according to some embodiments of the present disclosure.

A case 22 may provide a space in which the electrode assembly 10, for example, as shown in FIG. 1, is accommodated and may form the overall exterior of the secondary battery. The case 22 may be made of a conductive metal, such as aluminum, an aluminum alloy, nickel-plated steel, or a stainless steel material.

A first terminal 24 and a second terminal 26 may be electrically connected to a first electrode tab 14 and a second electrode tab 15 of the electrode assembly 10 in the case 22, respectively, and, thus, may be installed to be exposed to the outside of the case 22.

An electrolyte injection port 28 may also be formed in the case 22, and a vent may be formed to be opened by excess gas generated inside a battery to discharge the gas (e.g., to allow for degassing).

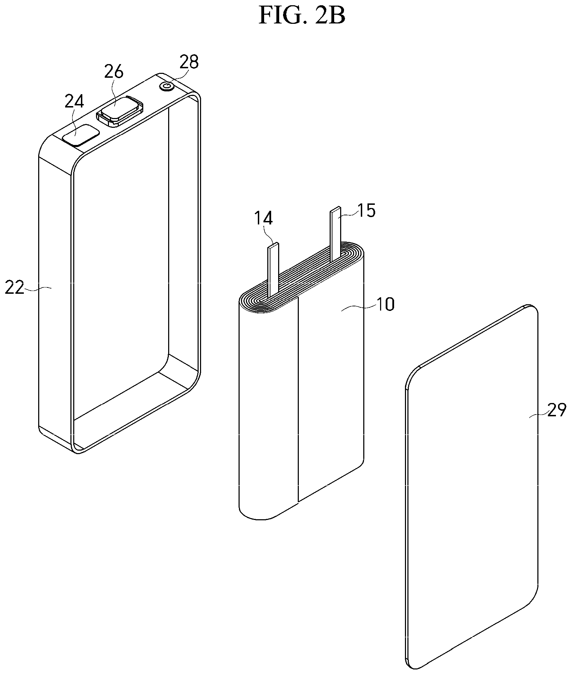

FIG. 2B is an exploded perspective view of the secondary battery shown in FIG. 2A.

The secondary battery, according to embodiments of the present embodiments, may have a structure in which a lateral wide surface of the case 22 forms an opening, and the electrode assembly 10 is laterally inserted into the opening and covered with a cover 29. The first electrode tab 14 and the second electrode tab 15 of the electrode assembly 10 may be welded and connected to the first terminal 24 and the second terminal 26 exposed to the outside of the case 22.

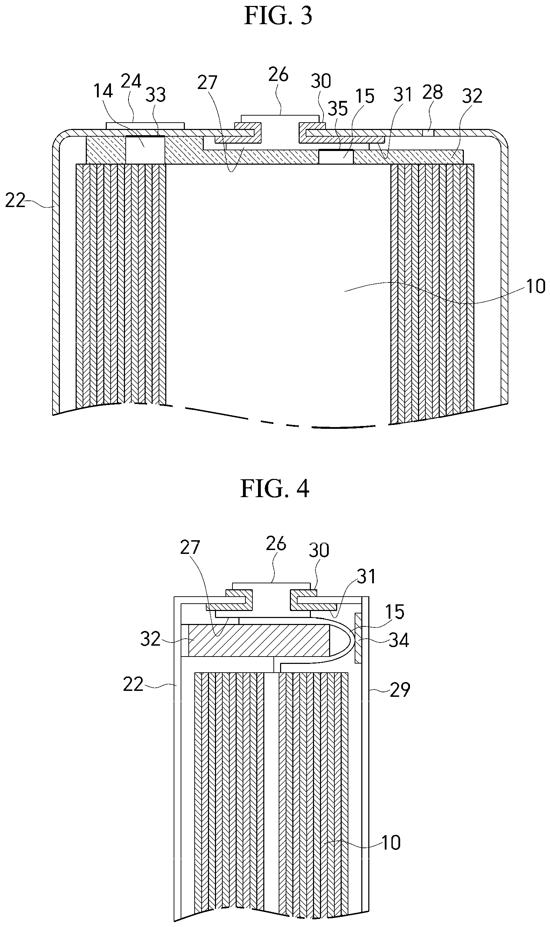

FIGS. 3 and 4 illustrate a more detailed view of parts of the secondary battery shown in FIGS. 2A and 2B. FIG. 3 is a cross-sectional view taken along the line I-I' in FIG. 2A, and FIG. 4 is a cross-sectional view taken along the line II-II' in FIG. 2A.

First, referring to FIG. 3, the first terminal 24 may be bonded to the case 22, and the second terminal 26 may be electrically insulated from the case 22 by an insulator 30 and may extend into the case 22. Accordingly, the second terminal 26 may have an inner terminal portion 27 that is located inside the case 22. The insulator 30 may have an inner insulating portion 31 located inside the case 22 to provide electrical insulation between the second terminal 26 and the case 22.

The first electrode tab 14 of the electrode assembly 10, which is laterally inserted into the case 22, may be welded to a welding portion of an inner surface of the case 22 and connected to the first terminal 24 through the case 22. The second electrode tab 15 of the electrode assembly 10 may be welded to the inner terminal portion 27 of the second terminal 26. Reference numeral 33 denotes the welding portion (or welding area) at where the first electrode tab 14 is welded to the inner surface of the case 22, and reference numeral 35 denotes a welding portion (or welding area) at where the second electrode tab 15 is welded to the inner terminal portion 27 of the second terminal 26. The first electrode tab 14 and the second electrode tab 15 may be bent as shown in, for example, FIG. 4. FIG. 4 only illustrates the second electrode tab 15 of the electrode assembly 10 being bent to be welded to the inner terminal portion 27 of the second terminal 26 (e.g., FIG. 4 illustrates the secondary battery being cut in an axial direction of the second terminal 26, and thus a bending structure of the first electrode tab 14 is not shown). However, the first electrode tab 14 may also be bent.

Due to such an assembly structure, an electrode plate insulating member 32 provides electrical insulation between the inner side of the first terminal 24 and an electrode plate edge surface of the electrode assembly 10 and electrical insulation between the inner terminal portion 27 of the second terminal 26 and the electrode plate edge surface of the electrode assembly 10. In addition, an inner surface of the cover 29, which covers a side surface after assembly, may be in contact with bent portions of the first electrode tab 14 and the second electrode tab 15, and a bent portion insulating member 34 electrically insulates the bent portions thereof.

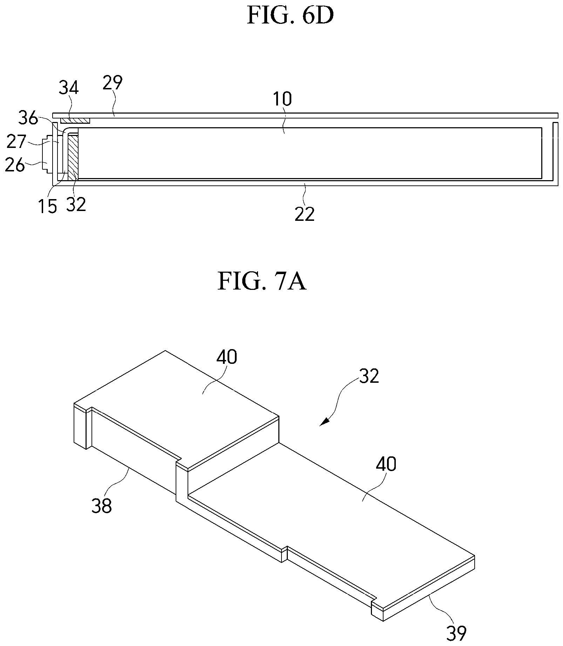

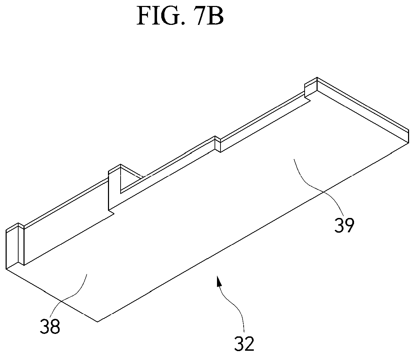

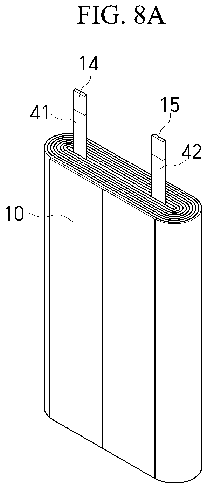

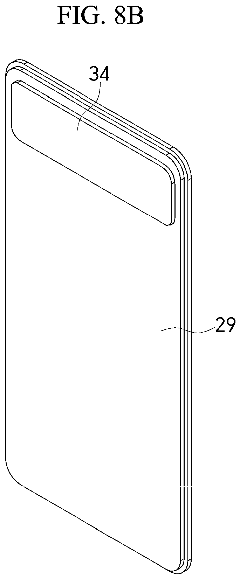

The electrode plate insulating member 32 will be described in more detail below, and an example shape thereof is illustrated in FIGS. 7A and 7B. In addition, the bent portion insulating member 34 will be described in more detail below, and an example shape thereof is illustrated in FIGS. 8A and 8B.

Conventionally, after the electrode assembly 10 is laterally inserted into the case 22, an insulating member was applied, and then the case, the terminals, and the electrode tabs were connected through welding. Ease of operation was secured by forming the electrode tab to be elongated (e.g., by forming an elongated electrode tab). However, to increase battery capacity, a size (particularly, an area of an electrode plate) of the electrode assembly 10 should be increased, and thus, it is desirable to shorten lengths of the electrode tabs 14 and 15 and narrow a space between the inner surface of the case 22 and the electrode assembly 10. The conventional assembly method, described above, is very difficult to perform in connection with an increased capacity battery having the bent, relatively short electrode tabs 14 and 15 and needing to be welded in a narrow space.

Therefore, according to embodiments of the present disclosure, the electrode tabs 14 and 15 are formed to be as short as possible and an effective area of the electrode assembly 10 is increased accordingly, thereby improving an assembly method and an application method of an insulating member to increase battery capacity. An assembly method of an electrode assembly according to embodiments of the present disclosure includes, first, welding an electrode tab, and then, inserting an electrode assembly into a case to, thus, change a method of installing an insulating member. In more detail, an operation of assembling an electrode assembly during a process of manufacturing a secondary battery according to embodiments of the present disclosure may be performed in the order of electrode tab welding, insulating member inserting, electrode tab bending, and electrode assembly inserting. In addition, an application method of an insulating member according to embodiments of the present disclosure may be performed by inserting an insulating member after welding an electrode tab and then bending the electrode tab. In addition, an insulating member may be applied to be divided into the electrode plate insulating member 32 and the bent portion insulating member 34. The electrode plate insulating member 32 provides electrical insulation between an inner welding portion 33 of the first terminal 24 and the electrode plate edge surface of the electrode assembly 10 and electrical insulation between the inner terminal portion 27 of the second terminal 26 and the electrode plate edge surface of the electrode assembly 10, and the bent portion insulating member 34 provides electrically insulating portions through which an inner surface of the cover 29, which covers a side surface of the case 22 after final assembly, is in contact with the bent portions of the first electrode tab 14 and the second electrode tab 15.

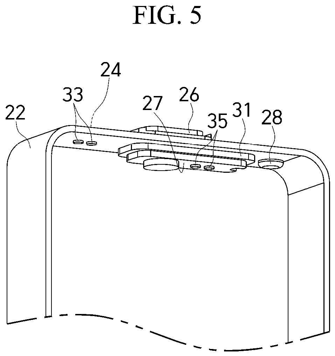

FIG. 5 illustrates an upper inner surface and a terminal portion of the case 22. FIG. 5 is a perspective view illustrating a corresponding portion to further describe some of the structure shown in FIGS. 3 and 4.

The welding portion 33, through which the first electrode tab 14 is welded to the inner surface of the case 22, is provided inside an upper surface of the case 22, and a welding portion 35, through which the second electrode tab 15 is welded to the inner terminal portion 27 of the second terminal 26, is provided on the inner terminal portion 27. The welding portions 33 and 35 may be plated with a material for facilitating the welding of the electrode tabs 14 and 15 or may be surface-treated to improve contact properties. However, the present disclosure is not limited thereto.

Other elements are the same as those described above with reference to FIGS. 2A to 4.

Hereinafter, a method of manufacturing a secondary battery according to embodiments of the present disclosure will be described. Through the following description of the manufacturing method, the detailed structure of the secondary battery according to embodiments of the present disclosure described above will become more clear.

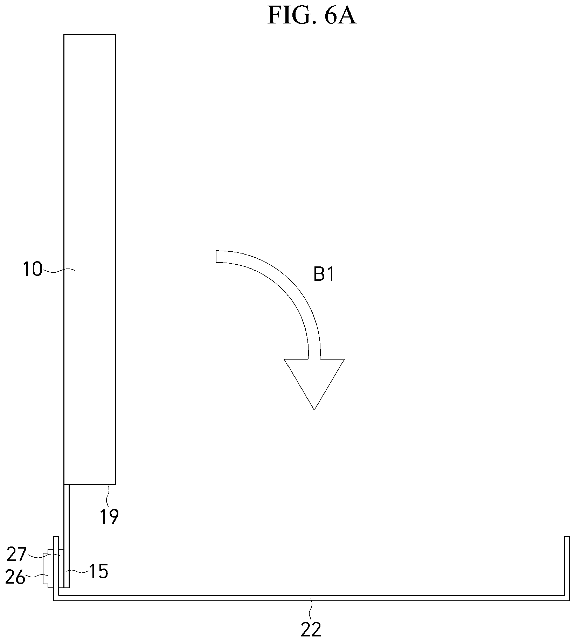

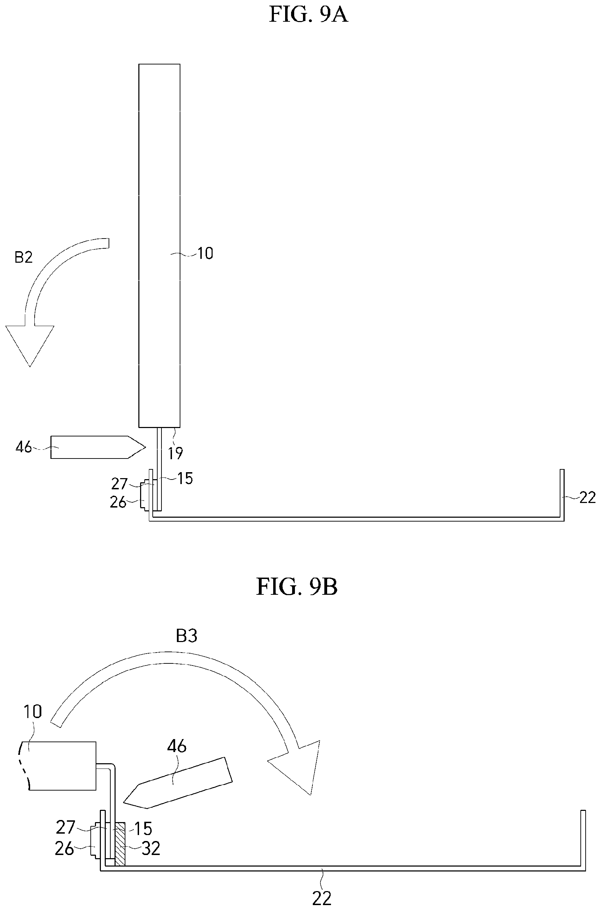

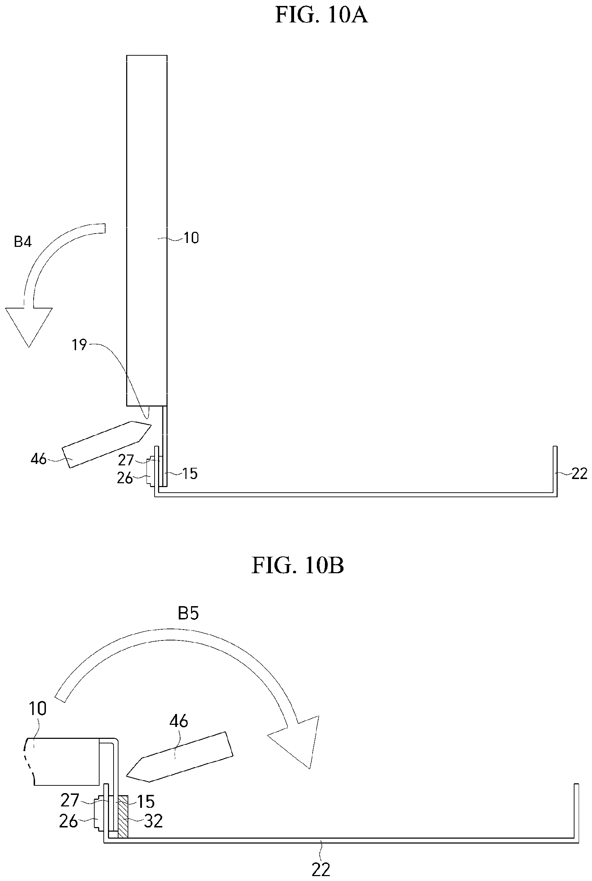

FIGS. 6A to 6D are views illustrating steps of an assembly method of a case and an electrode assembly according to some embodiments of the present disclosure. FIGS. 9A to 9D are views illustrating steps of an assembly method of a case and an electrode assembly according to some other embodiments of the present disclosure. FIGS. 10A to 10D are views illustrating steps of an assembly method of a case and an electrode assembly according to some other embodiments of the present disclosure.

The embodiment described with reference to FIGS. 6A to 6D indicates an assembly method in a case in which the second electrode tab 15 of the electrode assembly 10 is located relatively close to an outer side of an electrode plate edge surface 19 of the electrode assembly 10, in which the outer side is a side exposed to the outside after the electrode assembly 10 is laterally inserted into the case 22. The embodiment described with reference to FIGS. 9A to 9D indicates an assembly method in a case in which second electrode tab of the electrode assembly 10 is located at a middle portion of the electrode assembly 10, and the middle portion is a middle position of the electrode plate edge surface 19 of the electrode assembly 10. The embodiment described with reference to FIGS. 10A to 10D indicates an assembly method in a case in which the second electrode tab of the electrode assembly 10 is located relatively close to an inner side of the electrode plate edge surface 19 of the electrode assembly 10, and the inner side is a side in contact with the inner surface of the case 22 after the electrode assembly 10 is laterally inserted into the case 22.

First, with reference to FIGS. 6A to 6D, an embodiment in which the second electrode tab 15 of the electrode assembly 10 is located at the outer side (described above) of the electrode plate edge surface 19 of the electrode assembly 10 will be described. In the following description, a cross-sectional view in which the electrode assembly 10 is cut in an axial direction of the second electrode tab 15 will be used for convenience of understanding. The second terminal 26 and the second electrode tab 15 will be briefly referred to as "terminal 26" and "electrode tab 15," respectively.

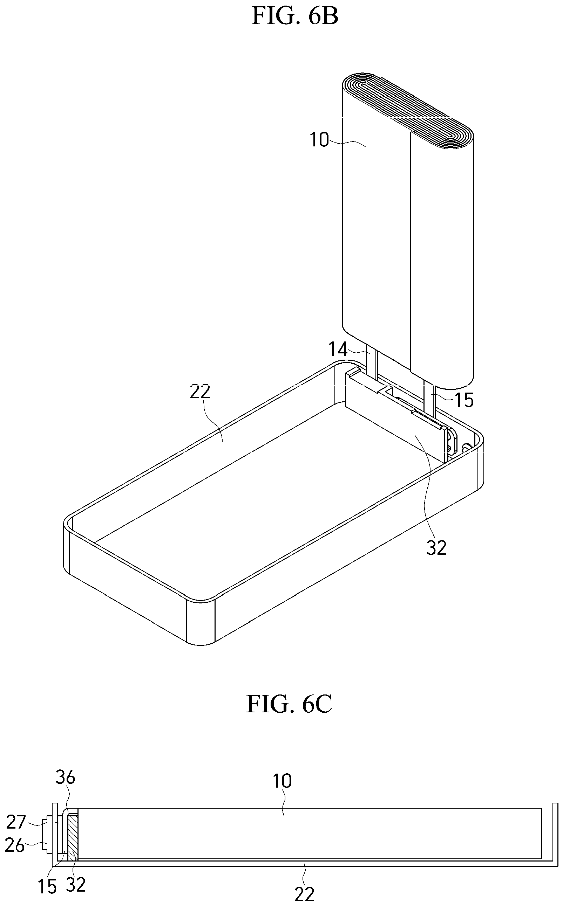

As shown in FIG. 6A, the electrode tab 15 may be welded to the inner terminal portion 27 of the terminal 26 in a state in which the case 22 is set and the electrode assembly 10 is erected (e.g., is oriented vertically or perpendicular to the case 22). When the electrode assembly 10 is rotated in a direction of arrow B1, the electrode tab 15 is bent. However, before the electrode assembly 10 is rotated in the direction of arrow B1, the electrode plate insulating member 32 may be attached, as shown in FIG. 6B. Accordingly, the electrode plate insulating member 32 may cover the electrode tabs 14 and 15, the inner surface of the case 22, and the inner terminal portion 27, and when the electrode assembly 10 is rotated and inserted into the case 22, electrical insulation may be provided between the electrode plate edge surface 19 of the electrode assembly 10 and adjacent members. A shape of the electrode plate insulating member 32 will be described below.

FIG. 6C illustrates a state in which, after the electrode plate insulating member 32 is attached as shown in FIG. 6B, the electrode assembly 10 is rotated in the direction of arrow B1 as shown in FIG. 6A and seated in the case 22. It can be seen that the electrode assembly 10 is inserted into the case 22, the electrode tab 15 is bent, and the electrode plate edge surface 19 (see, e.g., FIG. 6A) of the electrode assembly 10 is insulated from the electrode tab 15 by the electrode plate insulating member 32. The electrode plate insulating member 32 also acts as a hinge for fixing the electrode tab 15 when the electrode assembly 10 rotates.

Afterwards, the opening of the case 22 may be covered with the cover 29 and sealed as shown in FIG. 6D. In this case, as described above, the bent portion insulating member 34 may be attached to or formed on a corresponding portion of the cover 29 such that a bent portion 36 of the electrode tab 15 is not in contact with an inner surface of the cover 29.

FIGS. 7A and 7B illustrate embodiments of the electrode plate insulating member 32. FIG. 7A is an upper perspective view of the electrode plate insulating member 32, and FIG. 7B is a lower perspective view thereof.

The electrode plate insulating member 32 may primarily include a first insulating portion 38 for insulating the electrode plate edge surface 19 of the electrode assembly 10 from an inner portion of the first terminal 24 (e.g., the inner surface of the case 22) and a second insulating portion 39 for insulating the electrode plate edge surface 19 from the inner terminal portion 27 of the second terminal. The shapes of the first insulating portion 38 and the second insulating portion 39 shown here may be designed to be applied to fit an inner structure of the case shown in FIGS. 3 and 5. When actually manufactured, the shapes of the first insulating portion 38 and the second insulating portion 39 may depend on the various shape designs of a secondary battery. An adhesive layer 40 may be included on an upper surface of the electrode plate insulating member 32, that is, on a surface in contact with the welded portions of the electrode tabs 14 and 15 and a welding portion of the inner terminal portion 27 of the terminal 26, to prevent the bent portion 36 of the electrode tab from moving after being applied. However, in other embodiments, a component other than the adhesive layer 40, such as a snap hook or a concavo-convex joint, may be used.

An implementation method of the bent portion insulating member 34 is illustrated in FIGS. 8A and 8B as a non-limiting example.

As a first method, FIG. 8A illustrates a method in which insulating tapes 41 and 42 are respectively attached to the electrode tabs 14 and 15 to block the bent portions 36 (see, e.g., FIG. 6D) formed by bending the electrode tabs 14 and 15 from being in direct contact with the cover 29. In this method, the insulating tapes 41 and 42 are attached to cover an area sufficient to cover the bent portions formed when the electrode tabs 14 and 15 are bent.

As a second method, FIG. 8B illustrates a method in which a plate-shaped bent portion insulating member 34 is attached to or formed on the cover 29 and applied. The plate-shaped bent portion insulating member 34 may be implemented by attaching an insulating tape or may be implemented by using a method including anodizing, insert injection, coating, or printing when the cover 29 is manufactured.

Next, with reference to FIGS. 9A to 9D, a case in which the electrode tab 15 is located at the middle portion (described above) of the electrode plate edge surface 19 of the electrode assembly 10 will be described.

As shown in FIG. 9A, the electrode tab 15 may be welded to the inner terminal portion 27 of the terminal 26 in a state in which the case 22 is set and the electrode assembly 10 is erected (e.g., is vertically oriented or oriented perpendicular to the case 22). To rotate the electrode assembly 10 in a direction of arrow B2, a bending blade 46 is placed on the electrode tab 15 to rotate and turn the electrode assembly 10 in the direction of arrow B2, which is a direction away from the case 22, that is, to the outside of a surface on which the terminal 26 of the case 22 is located (primary rotation). In this embodiment, the electrode plate insulating member 32 may be inserted before the electrode assembly 10 is rotated in the direction of arrow B2 or may be inserted after the electrode assembly 10 is rotated in the direction of arrow B2.

FIG. 9B illustrates a process in which, after the electrode plate insulating member 32 is attached to the electrode tab 15 of the electrode assembly 10 and is rotated and turned in the direction of arrow B2 in FIG. 9A, the electrode assembly 10 is secondarily rotated in a direction of arrow B3 toward the case 22. Even in this case, the bending blade 46 may be used to smoothly bend the electrode tab 15.

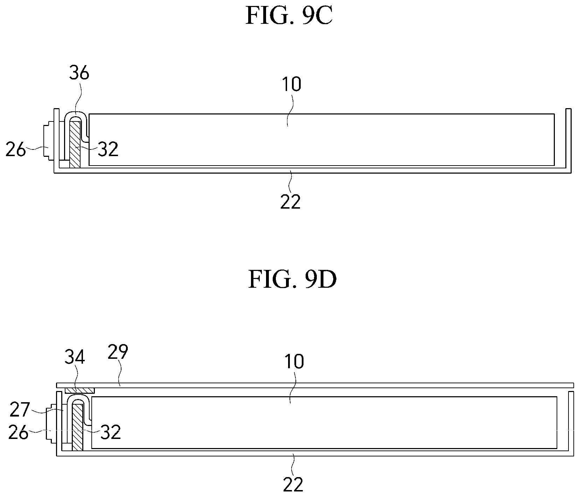

FIG. 9C illustrates a state in which the electrode assembly 10 is secondarily rotated and seated in the case 22. It can be seen that the electrode assembly 10 is inserted into the case 22, the electrode tab 15 is bent, and the electrode tab 15 is insulated from the electrode plate edge surface 19 (see, e.g., FIG. 9A) of the electrode assembly 10 by the electrode plate insulating member 32.

Afterwards, the opening of the case 22 may be covered with the cover 29 and sealed as shown in FIG. 9D. In this embodiment, as described above, the bent portion insulating member 34 may be attached to or formed on a corresponding portion of the cover 29 to insulate the bent portion 36 of the electrode tab 15 to not contact the inner surface of the cover 29.

The description of the electrode plate insulating member 32 is the same as the description provided above with reference to FIGS. 7A and 7B. The description of the bent portion insulating member 34 is the same as the description provided above with reference to FIGS. 8A and 8B.

Referring to FIGS. 10A to 10D, a case in which the electrode tab 15 is located at the inner side (described above) of the electrode plate edge surface 19 of the electrode assembly 10 will be described.

As shown in FIG. 10A, the electrode tab 15 may be welded to the inner terminal portion 27 of the terminal 26 in a state in which the case 22 is set and the electrode assembly 10 is erected (e.g., is oriented vertically or perpendicular to the case 22). To rotate the electrode assembly 10 in a direction of arrow B4, the bending blade 46 is placed at an appropriate position of the electrode tab 15 to rotate the electrode assembly 10 in the direction of arrow B4, which is a direction away from the case 22, that is, to the outside of a surface on which the terminal 26 of the case 22 is located (primary rotation). In this case, the electrode plate insulating member 32 may be inserted before the electrode assembly 10 is primarily rotated in the direction of arrow B4 or may be inserted after the electrode assembly 10 is primarily rotated in the direction of arrow B4.

FIG. 10B illustrates a process in which, after the electrode plate insulating member 32 is attached to the electrode tab 15 of the electrode assembly 10 and is rotated and turned in the direction of arrow B4 in FIG. 10A, the electrode assembly 10 is secondarily rotated in a direction of arrow B5 toward the case 22. Even in this case, the bending blade 46 may be used to smoothly bend the electrode tab 15.

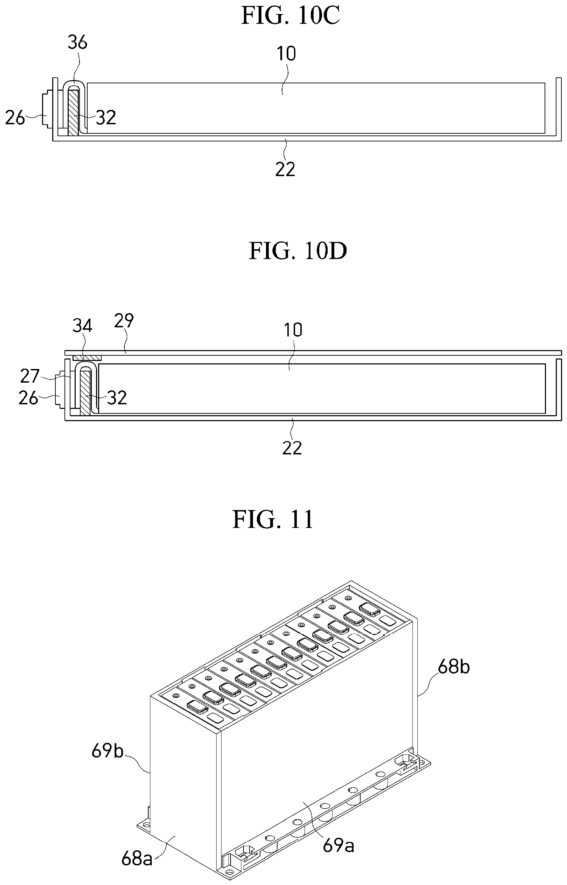

FIG. 10C illustrates a state in which the electrode assembly 10 is secondarily rotated and seated in the case 22. It can be seen that the electrode assembly 10 is inserted into the case 22, the electrode tab 15 is bent, and the electrode tab 15 is insulated from the electrode plate edge surface 19 (see, e.g., FIG. 9A) of the electrode assembly 10 by the electrode plate insulating member 32.

Afterwards, the opening of the case 22 may be covered with the cover 29 and sealed as shown in FIG. 10D. In this case, as described above, the bent portion insulating member 34 may be attached to or formed on a corresponding portion of the cover 29 to insulate the bent portion 36 of the electrode tab 15 to be prevented from being in contact with the inner surface of the cover 29.

The description of the electrode plate insulating member 32 is the same as the description provided above with reference to FIGS. 7A and 7B. The description of the bent portion insulating member 34 is the same as the description provided above with reference to FIGS. 8A and 8B.

FIG. 11 is a perspective view of a secondary battery module in which prismatic secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting them together. The plurality of secondary batteries may be arranged in a space defined by a pair of facing end plates 68a and 68b and a pair of facing side plates 69a and 69b. The secondary batteries may be arranged in an arrangement (direction) and number to obtain desired voltage and current specifications.

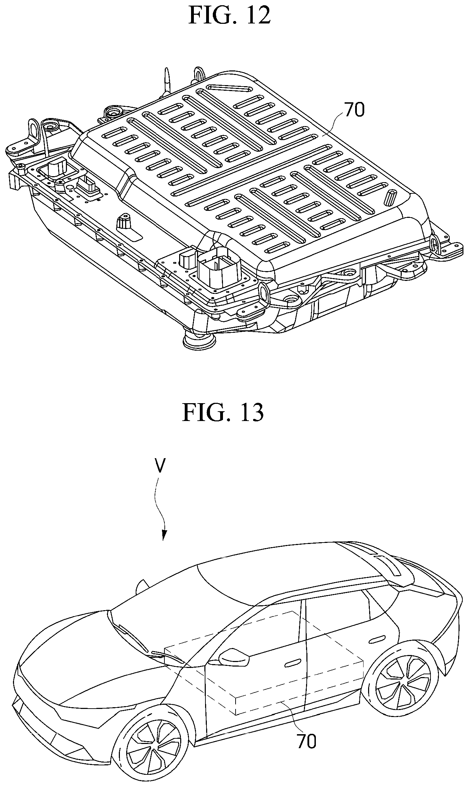

FIG. 12 is a perspective view of a battery pack 70 according to embodiments of the present disclosure. Referring to FIG. 12, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 13 shows a vehicle V that includes the battery pack 70 shown in FIG. 12 on the lower body thereof. The vehicle V may operate by (e.g., may be powered by) receiving power from the battery pack 70.

According to embodiments of the present disclosure as described above, an electrode assembly may be laterally inserted and assembled into a side opening of a case to easily assemble the electrode assembly with a maximized size in a limited space. Thus, even when a tab of the electrode assembly is formed to be shorter and an area of the electrode assembly is increased, tab welding, tab bending, insulating material installing, and inserting of the electrode assembly into the case can be easily performed, thereby increasing battery capacity without the sacrifice of production costs.

Although the present disclosure has been described above with respect to embodiments thereof, the present disclosure is not limited thereto. Various modifications and variations can be made thereto by those skilled in the art within the spirit of the present disclosure as defined by the appended claims and their equivalents.

## Claims

1. A secondary battery comprising:
a case (22) having an open side surface;
an electrode assembly (10) inserted into the case (22) through the open side surface, the electrode assembly (10) comprising a bent electrode tab (14, 15);
a terminal electrically connected to the electrode tab (14, 15) of the electrode assembly (10) and exposed to an outside of the case (22);
a cover (29) covering the open side surface of the case (22);
an electrode plate insulating member (32) electrically insulating an electrode plate of the electrode assembly (10) from the terminal; and
a bent portion insulating member (34) electrically insulating an inner surface of the cover (29) from the bent portion (36) of the electrode tab (14, 15).

2. The secondary battery as claimed in claim 1, wherein the terminal comprises:
a first terminal (24) connected to the case (22); and
a second terminal (26) electrically insulated from the case (22) by an insulator (30) and comprising an inner terminal portion (27) extending into the case (22).

3. The secondary battery as claimed in claim 2, wherein the electrode tab (14, 15) of the electrode assembly (10) comprises:
a first electrode tab (14) welded to an inner surface of the case (22) and connected to the first terminal (24) through the case (22); and
a second electrode tab (15) connected to the inner terminal portion (27) of the second terminal (26).

4. The secondary battery as claimed in claim 2, wherein the electrode plate insulating member (32) comprises:
a first insulating portion (38) electrically insulating the first terminal (24) from an electrode plate of the electrode assembly (10); and
a second insulating portion (39) electrically insulating the inner terminal portion (27) of the second terminal (26) from the electrode plate of the electrode assembly (10).

5. The secondary battery as claimed in claims 1 to **4,** wherein the bent portion insulating member (34) comprises one of an insulating tape (41, 42) attached to the electrode tab (14, 15) of the electrode assembly (10) and a plate-shaped insulator (30) applied to the inner surface of the cover (29).

6. The secondary battery as claimed in claims 1 to 5, wherein the bent portion (36) of the electrode tab (14, 15) faces the cover (29).

7. The secondary battery as claimed in claims 1 to 6, wherein the electrode tab (14, 15) of the electrode assembly (10) is connected to the terminal through welding, and wherein the terminal comprises a welding portion (33, 35) for welding the electrode tab (14, 15).

8. A method of manufacturing a secondary battery, the method comprising:
manufacturing a case (22) having an open side surface and a cover (29) configured to cover (29) the opening;
manufacturing an electrode assembly (10) comprising an electrode tab (14, 15);
manufacturing a terminal to be coupled to the case (22) and coupling the terminal to the case (22);
connecting the electrode tab (14, 15) of the electrode assembly (10) to the terminal that is coupled to the case (22);
applying an electrode plate insulating member (32) to electrically insulate an electrode plate of the electrode assembly (10) from the terminal;
bending the electrode tab (14, 15) of the electrode assembly (10);
inserting the electrode assembly (10) having the bent electrode tab (14, 15) into the case (22) through the open side surface in the case (22);
applying a bent portion insulating member (34) to electrically insulate the bent electrode tab (14, 15) from the cover (29); and
covering the open side surface in the case (22) with the cover (29).

9. The manufacturing method as claimed in claim 8, wherein the coupling of the terminal to the case (22) comprises:
bonding a first terminal (24) to the case (22); and
electrically insulating a second terminal (26) from the case (22) and coupling the second terminal (26) to the case (22).

10. The manufacturing method as claimed in claim 9, wherein the connecting of the electrode tab (14, 15) of the electrode assembly (10) to the terminal coupled to the case (22) comprises:
welding a first electrode tab (14) to an inner surface of the case (22) and connecting the first electrode tab (14) to the first terminal (24) through the case (22); and
welding and connecting a second electrode tab (15) to the second terminal (26).

11. The manufacturing method as claimed in claim 9, wherein the electrode plate insulating member (32) comprises:
a first insulating portion (38) electrically insulating the first terminal (24) from the electrode plate of the electrode assembly (10); and
a second insulating portion (39) electrically insulating an inner terminal portion (27) of the second terminal (26) from the electrode plate of the electrode assembly (10).

12. The manufacturing method as claimed in claims 8 to 11, wherein the applying of the bent portion insulating member (34) comprises one of attaching an insulating tape **(41,** 42) to the electrode tab (14, 15) of the electrode assembly (10) and attaching an insulator (30) to an inner surface of the cover (29).

13. The manufacturing method as claimed in claims 8 to 12, wherein the bending of the electrode tab (14, 15) of the electrode assembly (10) comprises rotating the electrode assembly (10) having the electrode tab (14, 15) that is connected to the terminal that is coupled to the case (22) toward the case (22).

14. The manufacturing method as claimed in claims 8 to 12, wherein the bending of the electrode tab (14, 15) of the electrode assembly (10) comprises:
primarily rotating the electrode assembly (10) having the electrode tab (14, 15) that is connected to the terminal that is coupled to the case (22) away from the case (22); and
secondarily rotating the primarily rotated electrode assembly (10) toward the case (22).

15. The manufacturing method as claimed in claims 8 to **14,** wherein the bending of the electrode tab (14, 15) of the electrode assembly (10) comprises rotating the electrode assembly (10) around the electrode plate insulating member (32) that electrically insulates the electrode plate of the electrode assembly (10) from the terminal.
